# EUROPEAN PATENT APPLICATION

(11) **EP 1 855 407 A2**
(43) Date of publication of application: **14.11.2007**
(21) Application number: 07107923.0
(22) Date of filing: 10.05.2007
(51) Int. Cl.: H04J 14/02, H04B 10/155

(54) **Reconfigurable optical add/drop multiplexing device comprising wideband optical input/output interfaces**

(30) Priority: 11.05.2006 FR 0604183
(71) Applicant: ALCATEL, 75008 Paris (FR)
(72) Inventor: Chiaroni, Dominique, 92160, ANTONY (FR); Le Sauze, Nicolas, 91440, BURES-SUR-YVETTE (FR); Dorgeuille, François, 75014, PARIS (FR); Kazmierski, Christophe, 91420, MORANGIS (FR); Sillard, Hélène, 78150, LE CHESNAY (FR)
(74) Representative: Bréda, Jean-Marc

(57) **Abstract**

The field of the invention is that of reconfigurable optical add/drop multiplexing devices, also called ROADM. The device according to the invention is capable of operating for any spectral channel belonging to a spectral band comprising a plurality of spectral channels. To this end, the ROADM described comprises at least one first opto-electronic assembly (20) comprising a fibre optic input port (21), a fibre optic output port (22), at least one optical gate (24) and optical coupling means (25,27), said gate and said means being capable of operating for all of said spectral channels, the coupling means being coupled to at least:
• an optical modulator (30), the function of which is to convert a modulated electrical signal into an optical signal, coupled to a tunable WDM-type transmission source (40), said modulator and said source being capable of operating at least over all of the channels;
• a photon detector (50) also capable of operating for all of said spectral channels, the function of which is to convert a modulated optical signal into an electrical signal.

## Description

The field of the invention is that of reconfigurable optical add/drop multiplexing devices and, more particularly, that of their input/output interfaces. These devices are better known by their English acronym, ROADM.

Modern fibre optic telecommunication networks fall into several categories. There are long haul networks deployed country-wide or continent-wide, wide-area networks, also called intermediate networks implemented agglomeration-wide, and finally local area networks, also called distribution networks or access networks. They represent the last link of this chain and complete the routing of the information to the subscriber.

The topology of the wide-area networks normally comprises communication links interlinked by DSLAM, Digital Subscriber Line Access Multiplexer, type devices. Normally, the DSLAMs are connected to at least one OADM mainly comprising optical add/drop multiplexers and which enable them to handle the following functions:
- Data extraction;
- Data insertion;
- Data deletion or maintenance.

When there is a requirement to transmit in one and the same optical fibre a large number of channels comprising high data rates, wavelength division multiplexing (WDM) is normally used. The principle applied consists in coupling into a single optical fibre, by means of appropriate optical devices, several optical carriers with adjacent wavelengths, each transmitting different information channels. Similar optical devices are used at the fibre output to separate the various spectral channels. This way, transmission rates of several tens of Gbits/s can be achieved.

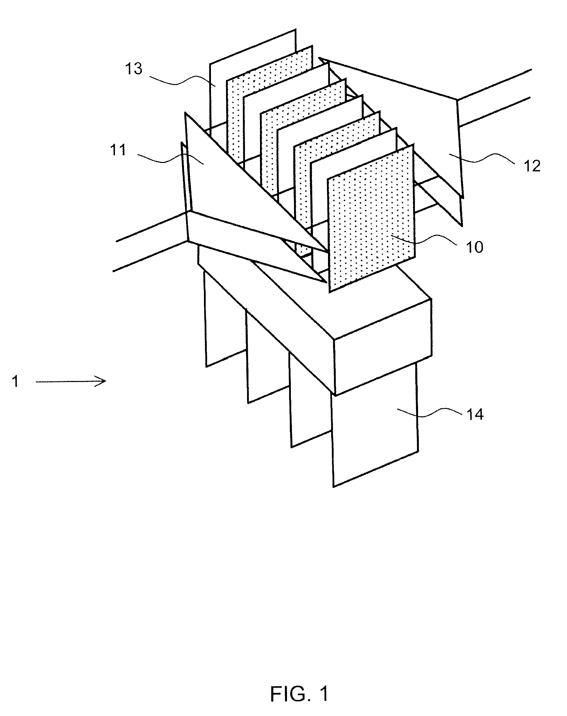

In this case, the DSLAM devices 1 connected to the ROADMs have the architecture of Figure 1. They mainly comprise:
- a multiplexing/demultiplexing device 11 and 12, for selecting the different spectral channels;
- ROADM-type devices 10 positioned on each of the spectral channels shown shaded in Figure 1;
- electro-optical conversion devices 14 which are used to provide the interface between each ROADM 10 and the digital data streams coming from the local area networks;
- additional ROADM-card protection devices 13.

Each device is linked to the rest of the network by fibre optic links.

There are different technologies and different architectures that can be used to implement these functions. Normally, an OADM structure comprises electro-optical reception and transmission devices making it possible to receive, block, transmit or add data on each channel. Thus, it is possible to produce an ROADM by using the so-called "wavelength blocker" technologies. An ROADM using this technology comprises means of dropping and adding data surrounding a multiplexing/demultiplexing assembly comprising a plurality of variable optical attenuators (VOA), each spectral channel disposed in the multiplexing/demultiplexing assembly comprising one of these attenuators. However, this technology has the main drawback of requiring a "wavelength blocker" which is an expensive component.

This type of device also has certain drawbacks associated with the electro-optical conversions required for processing the data and for the transmission sources used. In practice, the electronic conversions and the associated devices, such as, for example, the electronic memories, can slow down the data processing. Also, the transmission must necessarily be done at the exact wavelength of the channel. Thus, each card comprising an ROADM system becomes a specific card having its own transmission source transmitting at a specific wavelength. In this case, the term "coloured" devices applies. This thus means that each ROADM operates at a specific wavelength.

To overcome these drawbacks, the ROADM according to the invention has a so-called "colourless" architecture comprising only electro-optical elements operating over a waveband that is sufficient to process all the spectral channels of a given spectral band interchangeably.

More specifically, the subject of the invention is a reconfigurable optical add/drop multiplexing device, also called ROADM, capable of operating for any spectral channel belonging to a spectral band comprising a plurality of spectral channels, said device comprising at least one first opto-electronic assembly comprising a fibre optic input port, a fibre optic output port, at least one optical gate and optical coupling means, said gate and said means being capable of operating for all of said spectral channels, the coupling means being coupled to at least:
- an optical modulator, the function of which is to convert a modulated electrical signal into an optical signal, coupled to a tunable WDM-type transmission source, said modulator and said source being capable of operating at least over all of the channels;
- a photon detector also capable of operating for all of said spectral channels, the function of which is to convert a modulated optical signal into an electrical signal.

Advantageously, the optical modulator or the photon detector are optical electro-absorption modulators that can operate either in transmission mode or in reflection mode.

Advantageously, at least one modulator comprises a semiconductor optical amplifier.

Advantageously, the WDM-type transmission source is a distributed Bragg reflector laser diode.

Advantageously, the coupling means of the first opto-electronic assembly comprise an optical circulator linked at least to the input and output ports and to the optical modulator.

Advantageously, the optical circulator is also linked to the photon detector.

Advantageously, the first opto-electronic assembly comprises at least one multiplexing/demultiplexing device linked at least to the input and output ports, the coupling means being positioned on one of the channels.

The invention will be better understood and other advantages will become apparent from reading the description that follows, given by way of nonlimiting example, and from the appended figures among which:
- Figure 1 is the general block diagram of an ROADM switching device;
- Figure 2 represents the general principle of an ROADM according to the invention comprising elements operating by transmission;
- Figure 3 represents the general principle of an ROADM according to the invention comprising elements operating by reflection;
- Figures 4, 5 and 6 represent three variants of an ROADM according to the invention comprising an optical circulator linked to a modulator;
- Figures 7, 8 and 9 represent three variants of an ROADM according to the invention comprising an optical circulator linked to a modulator and to a photon detector;
- Figures 10 and 11 represent two variants of an ROADM according to the invention comprising a multiplexing/demultiplexing device.

An ROADM needs to be able to perform the following operations on a signal arriving at its input port:
- Transmission of the signal to the output port;
- Attenuation or blocking of this signal;
- Extraction of the signal and conversion to electrical signal, called "Drop";
- Conversion and insertion of a new electrical signal, called "Add".

For the ROADM assembly to be "colourless", that is, capable of operating at any wavelength belonging to a given spectral band, all of its component elements must also be colourless. Typically, a spectral band used in optical telecommunications has a width of a few tens of nanometres and the wavelengths used are separated by less than one nanometre. The wavelengths used are normally located in the near-infrared, around 1450 nanometres or 1550 nanometres.

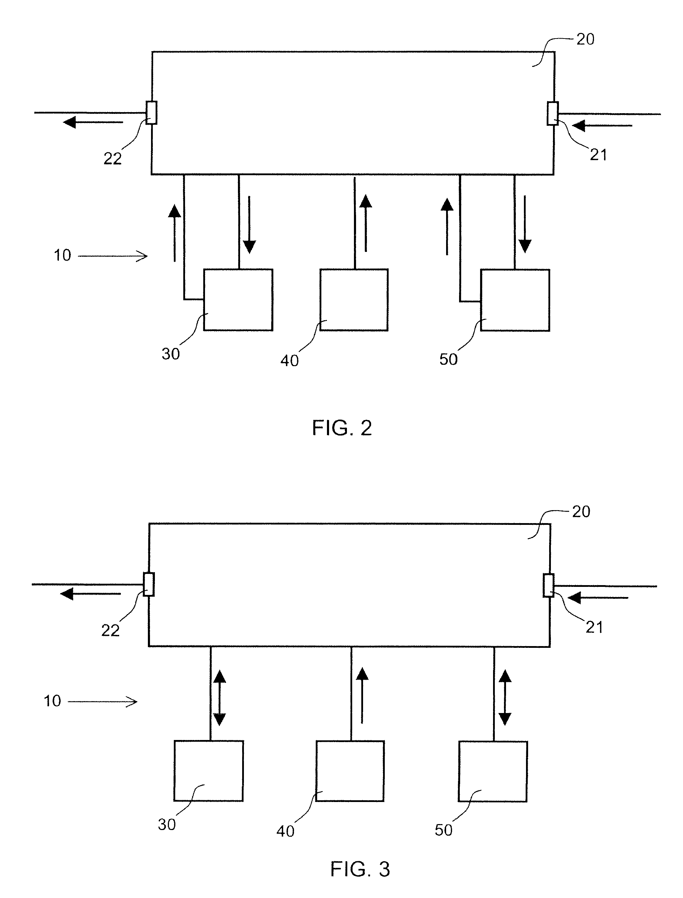

Figures 2 and 3 represent the general principle of ROADM according to the invention comprising elements operating either by transmission or by reflection capable of providing the above functions. Said ROADMs 10 comprise at least:
- a first opto-electronic assembly 20 comprising a fibre optic input port 21, a fibre optic output port 22, optical coupling means;
- an optical modulator 30, the function of which is to convert a modulated electrical signal into an optical signal, coupled to:

- a tunable WDM-type transmission source 40;
- a photon detector 50, the function of which is to convert a modulated optical signal into an electrical signal.

In Figures 2 and 3, the following convention has been adopted: when the component operates by reflection, the link that links it to the first opto-electronic assembly is a double arrow, when it operates by transmission, the links are indicated by single arrows.

For the ROADM assembly to be "colourless", all of its component elements must also be colourless. The couplers and the detectors are substantially "colourless". For the detection and add functions, optical electro-absorption modulators can advantageously be used, also known by the French acronym MEA or English acronym EAM.

The principle of operation of the electro-absorption modulators is based on modifications of the absorption spectrum of a semiconductor subjected to an electrical field. It is in the vicinity of the absorption edge, at the point where the drift of the absorption relative to the wavelength is greatest, that this effect is most effective. An increase in the electrical field shifts the absorption edge towards the higher wavelengths and consequently increases the absorption of the light passing through the conductor. Thus, by controlling the control voltage of an EAM by means of a modulated electrical signal, the amplitude of a light beam having a wavelength corresponding to the absorption edge can be modulated.

It is also possible to use the modulator as a photodetector. In this case, the absorption of an optical signal modulated by the modulator leads to the transmission of an induced current, the amplitude of which has a modulation matching that of the initial optical signal.

When the light beam passes through the modulator, it is said to operate by transmission; when the light beam is reflected by the rear face of the modulator, it is said to operate by reflection. In these conditions, the modulation is doubled. One of the benefits of the EAM is that it is operational over a spectral band compatible with the spectral bands of optical telecommunications. Consequently, a judicious choice of its various parameters can render it "colourless".

Obviously, a modulator cannot transmit a modulated signal on its own. It must necessarily have added to it a WDM-type light source. This can possibly be a distributed Bragg reflector laser diode. The benefit of this type of source is that it is possible to adjust it exactly to the transmission wavelength. Thus, without changing the source, it is possible to adapt an ROADM card according to the invention to a specific wavelength of a given spectral band.

It is also possible to add to a modulator a semiconductor optical amplifier, also called SOA. By controlling the gain of this amplifier, it is thus possible to amplify the signal or to stop it. The assembly can be produced either using discrete components, or in hybrid fashion on the same substrate.

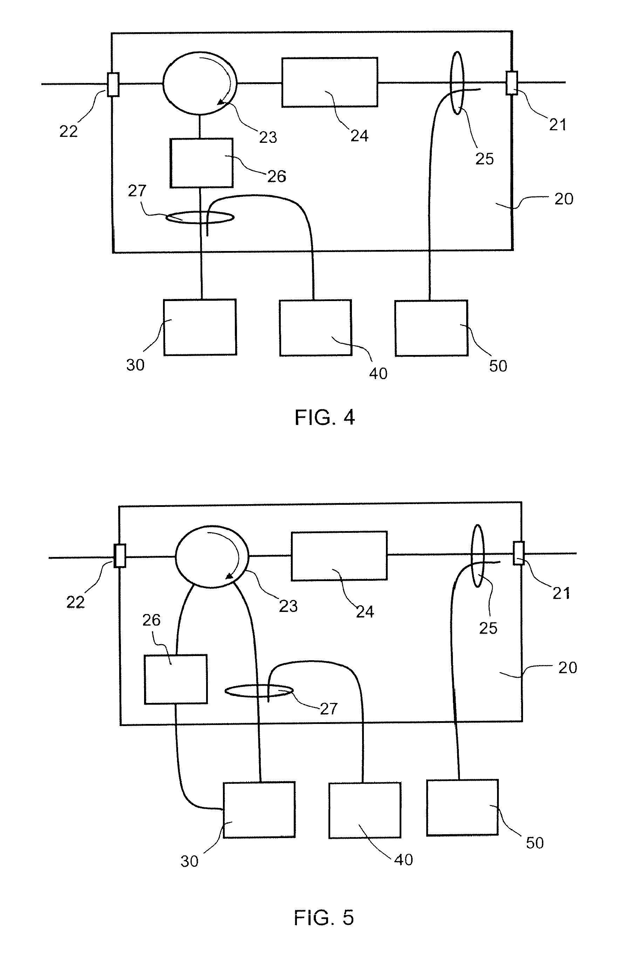

Based on the diagrams illustrated in Figures 2 and 3, there is a wide variety of possible architectures of ROADM devices according to the invention represented in Figures 4 to 11. In these figures, only the first opto-electronic assembly of the ROADM has been detailed. The following conventions have been adopted: the optical circulators are represented by circles, the Y-type optical couplers by elongated ellipses, the opto-electronic elements by squares and the optical gates by rectangles. The optical circulators are passive optical devices that can be used to send or receive optical signals on several optical ports. In order to avoid spurious echos, a rotation direction is favoured. This rotation direction is conventionally indicated by a semi-circular arrow in Figures 4 to 11.

As a first nonlimiting example, Figures 4, 5 and 6 propose three variants of one and the same theoretical ROADM architecture. The main characteristic of this architecture is that the first opto-electronic assembly comprises an optical circulator 23 linked at least to the input ports 21 and output ports 22 and to the optical modulator 30.

Figure 4 represents a first variant of this type of architecture where the modulator operates by reflection. The first opto-electronic assembly 20 comprises:
- a fibre optic input port 21;
- a fibre optic output port 22;
- an optical circulator 23;
- an optical gate 24;
- an optical amplifier 26;
- optical couplers 25 and 27.

In Figure 4, the circulator 23 is linked:
- to the input port 21 via a first coupler 25 and an optical gate 24, said coupler 25 itself being linked to the photon detector 50. The functions for deleting and dropping data are thus implemented;
- to the optical modulator 30 operating in reflection mode, itself coupled to the WDM-type transmission source 40 by means of a second coupler 27. The function for adding data is thus implemented;
- to the output port 22.

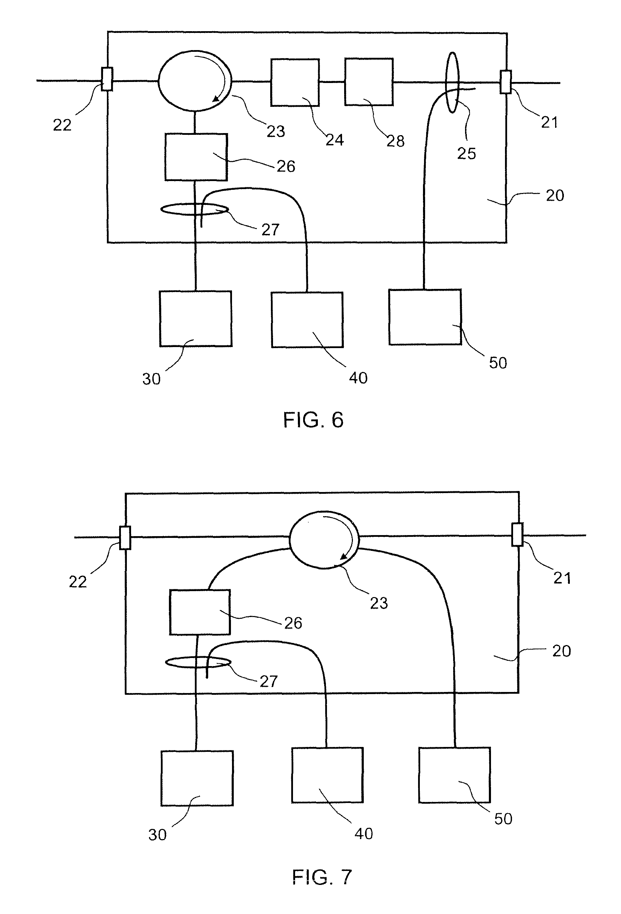

This first architecture can have several variants. In Figure 5, the modulator no longer operates by reflection but by transmission. It is thus coupled to the circulator 23 by two different ports, an input port and an output port. In Figure 6, the optical gate comprises a blocking element 24, which can be an EAM, and an amplifying element 28 which can be an SOA. Obviously, the architectures described in Figures 5 and 6 can be combined.

As a second nonlimiting example, Figures 7, 8 and 9 propose three variants of the same theoretical ROADM architecture. The main characteristic of this architecture is that the first opto-electronic assembly comprises a central optical circulator 23 linked to at least the input ports 21 and output ports 22, to the optical modulator 30 and to the photon detector 50.

Figure 7 represents a first variant of this type of architecture. The first opto-electronic assembly 20 comprises:
- a fibre optic input port 21;
- a fibre optic output port 22;
- an optical circulator 23;
- an optical gate 26;
- an optical coupler 27.

In Figure 7, the circulator 23 is linked:
- to the input port 21;
- to a photon detector 50;
- to the optical modulator 30 via an optical gate 26, the modulator operating in reflection mode, itself coupled to the tunable WDM-type transmission source 40 by means of a coupler 27. The functions for adding and deleting data are thus implemented;
- to the output port 22.

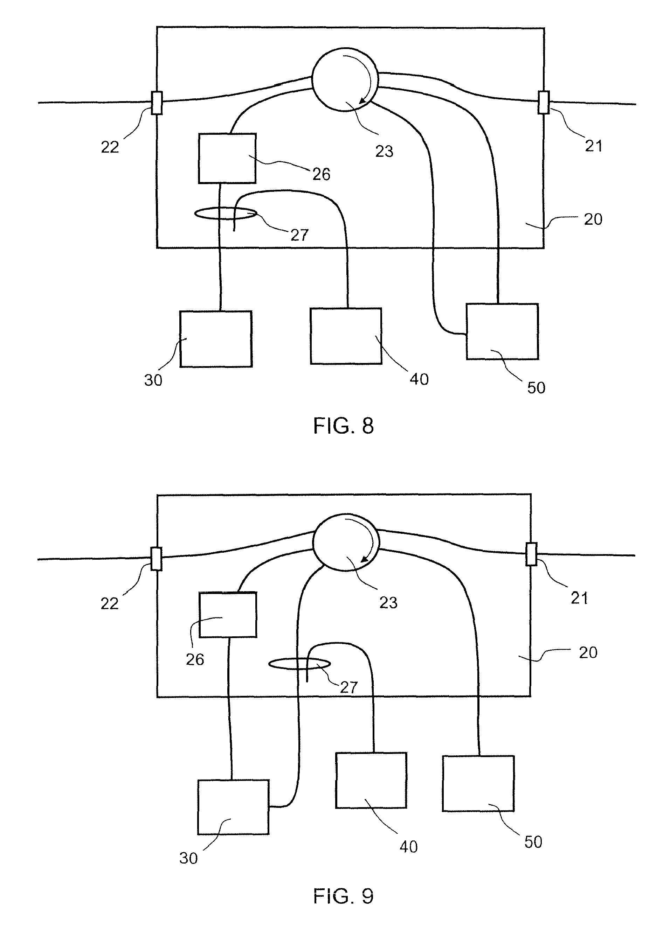

This second architecture can have a number of variants. In Figure 8, the photon detector 50 no longer operates by reflection but by transmission. It is thus coupled to the circulator 23 by two different ports, an input port and an output port. In Figure 9, the modulator 30 no longer operates by reflection but by transmission. It is thus coupled to the circulator by two different ports, an input port and an output port. Obviously, the architectures described in figures 8 and 9 can be combined.

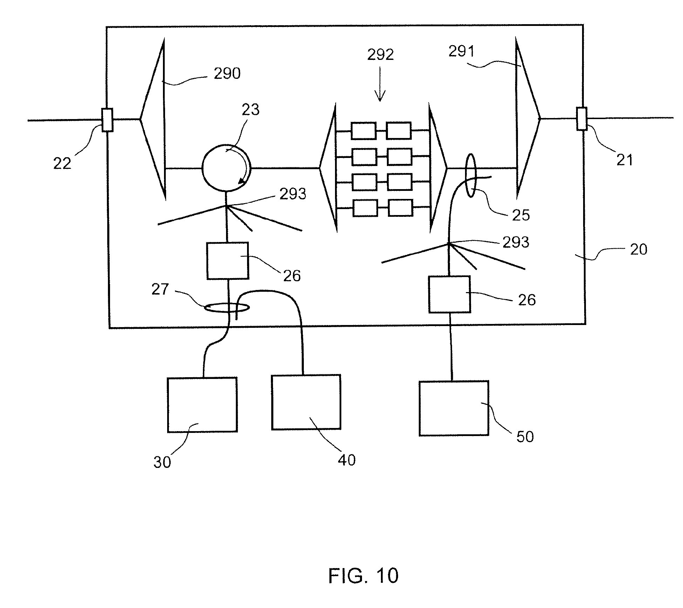

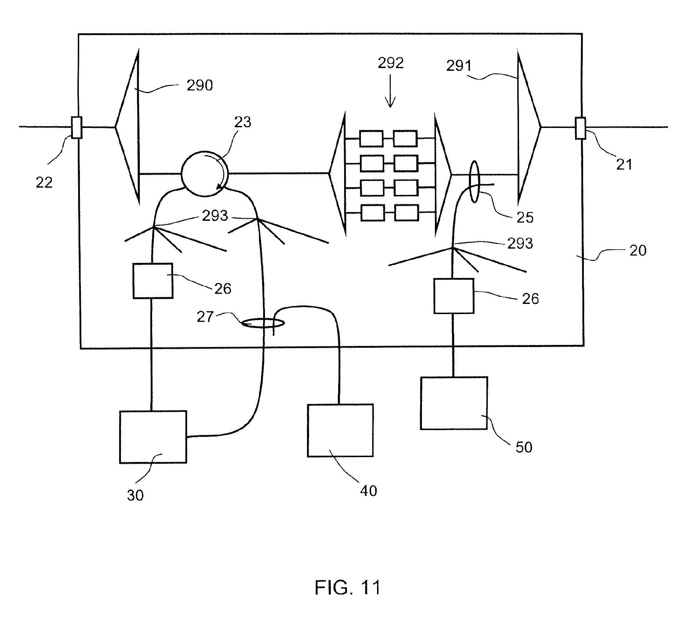

As a third nonlimiting example, Figures 10 and 11 propose two variants of one and the same theoretical ROADM architecture. The main characteristic of this architecture is that the first opto-electronic assembly 20 comprises a multiplexer/demultiplexer assembly 290 and 291 positioned between the input 21 and output 22 ports. As indicated in Figures 10 and 11, each spectral channel disposed between the multiplexing/demultiplexing assembly can comprise the functions of an ROADM produced by means of the optical and opto-electronic components described previously. Secondary branch connections 293 linked to other opto-electronics devices that are not shown can also be inserted into the first opto-electronic assembly 20, as can secondary multiplexing/demultiplexing devices 292. In Figure 10, the modulator 30 operates by reflection, in Figure 11, the optical modulator 30 operates by transmission.

## Claims

1. Reconfigurable optical add/drop multiplexing device, also called ROADM, capable of operating for any spectral channel belonging to a spectral band comprising a plurality of spectral channels, said device comprising at least one first opto-electronic assembly (20) comprising a fibre optic input port (21), a fibre optic output port (22), at least one optical gate (24) and optical coupling means (25, 27), said gate and said means being capable of operating for all of said spectral channels, the coupling means being coupled to at least:
• an optical modulator (30), the function of which is to convert a modulated electrical signal into an optical signal, coupled to a tunable WDM-type transmission source (40), said modulator and said source being capable of operating at least over all of the channels;
• a photon detector (50) also capable of operating for all of said spectral channels, the function of which is to convert a modulated optical signal into an electrical signal.

2. Reconfigurable optical add/drop multiplexing device according to Claim 1, **characterized in that** the optical modulator (30) or the photon detector (50) are optical electro-absorption modulators.

3. Reconfigurable optical add/drop multiplexing device according to Claim 2, **characterized in that** said modulators operate in transmission mode.

4. Reconfigurable optical add/drop multiplexing device according to Claim 2, **characterized in that** said modulators operate in reflection mode.

5. Reconfigurable optical add/drop multiplexing device according to one of Claims 2 to 4, **characterized in that** at least one modulator comprises a semiconductor optical amplifier.

6. Reconfigurable optical add/drop multiplexing device according to Claim 1, **characterized in that** the WDM-type transmission source (40) is a distributed Bragg reflector laser diode.

7. Reconfigurable optical add/drop multiplexing device according to Claim 1, **characterized in that** the coupling means of the first opto-electronic assembly comprise an optical circulator (23) linked at least to the input and output ports and to the optical modulator.

8. Reconfigurable optical add/drop multiplexing device according to Claim 7, **characterized in that** the optical circulator (23) is also linked to the photon detector.

9. Reconfigurable optical add/drop multiplexing device according to Claim 1, **characterized in that** the first opto-electronic assembly comprises at least one multiplexing/demultiplexing device (290, 291) linked at least to the input and output ports, the coupling means being positioned on one of the channels.
